# EUROPÄISCHE PATENTSCHRIFT

(11) **EP 1 903 219 B1**
(45) Veröffentlichungstag und Bekanntmachung des Hinweises auf die Patenterteilung: **18.07.2012**
(21) Anmeldenummer: 07017627.6
(22) Anmeldetag: 08.09.2007
(51) Int. Cl.: F16B 5/02, F16B 37/04

(54) **Befestigungsvorrichtung zur Befestigung eines Bauteils an einem Trägerbauteil**
Fastening device for fastening a component to a support part
Dispositif pour la fixation d'un composant sur un élément de support

(30) Priorität: 21.09.2006 DE 102006044513
(43) Veröffentlichungstag der Anmeldung: 26.03.2008
(73) Patentinhaber: Jungheinrich Aktiengesellschaft, 22047 Hamburg (DE)
(72) Erfinder: Lohmann, Helmut, 27404 Nartum-Gyhum (DE); Röder, Matthias, 22523 Hamburg (DE)
(74) Vertreter: Hauck Patent- und Rechtsanwälte

(56) Entgegenhaltungen:
- EP-A1- 0 751 308
- WO-A2-01/98033
- DE-A1- 10 241 656
- DE-A1-102004 042 564
- US-A1- 2001 013 692
- US-A1- 2004 202 523

## Beschreibung

Die Erfindung bezieht sich auf eine Befestigungsvorrichtung zur Befestigung eines Bauteils an einem eine Öffnung aufweisenden Trägerbauteil mittels Gewindebolzen nach dem Oberbegriff des Patentanspruchs 1.

Aus DE 10241656 oder WO 01/98033, ist eine Befestigungsvorrichtung gemäß dem Oberbegriff des Patentanspruchs 1 bekannt.

In Flurförderzeugen werden größere Anbauteile wie Antriebseinheiten, Hubzylindereinheiten und dergleichen durch direkte Verschraubungen mit dem Fahrzeugrahmen verbunden. Aufgrund geometrischer Ungenauigkeiten der Schnittstellen, etwa Verformungen der rahmenseitigen Schnittstelle durch Verschweißen von Stahlplatten, Unebenheiten aufgrund der Beschaffenheit der Rahmenrohteile, Schweißpickel oder dergleichen, treten häufig Montageprobleme auf. Die Bohrungen fluchten nicht und während der Montage treten Verspannungen auf. Diese müssen meistens durch kostenaufwendige Nacharbeit bei der Montage oder durch besondere Vorarbeit bei der Herstellung ausgeglichen werden, weil sich ansonsten etwa bei Antriebseinheiten die Lenklager verspannen. Schrauben können bereits während der Montage belastet werden. In ungünstigen Fällen sind die Befestigungsschrauben nicht montierbar. Die Gewinde, welche in den Fahrzeugrahmen geschnitten werden, um die Anbauteile im Fahrzeug zu montieren, müssen bei der Lackierung des Fahrzeugs entweder von vornherein lackfrei gehalten oder im Anschluß vom Lack befreit werden, damit diese wieder freigängig sind.

Aus US 2001 013 692, ist ein Flurförderzeug bekannt.

Der Erfindung liegt die Aufgabe zugrunde, eine Befestigungsvorrichtung zur Befestigung eines Bauteils an einem Trägerbauteil zu schaffen, insbesondere für die Befestigung von Baueinheiten am Rahmen eines Flurförderzeugs, welche den Montageaufwand verringert sowie den Aufwand bei Reparaturen. Insbesondere soll die Befestigungsvorrichtung eine spannungsfreie Dreipunktlagerung ermöglichen.

Diese Aufgabe wird durch die Merkmale des Patentanspruchs 1 gelöst.

Bei der erfindungsgemäßen Befestigungsvorrichtung ist ein Gewindeelement vorgesehen, das mindestens zwei parallele relativ eng benachbarte Gewindebohrungen aufweist. An dem Mehrgewindeelement ist ein Halteblech angebracht, und am Halteblech und am Trägerbauteil sind nahe der Öffnung Positioniermittel vorgesehen, durch welche das Gewindeelement auf der dem Bauteil gegenüberliegenden Seite des Trägerbauteils mit lagerichtiger Ausrichtung von Gewindebohrungen zu Durchgangsbohrungen in dem Trägerbauteil gehalten ist. Zusätzlich ist ein Unterlegblech von einem Unterlegabschnitt des Halteblechs gebildet.

Das Mehrfach-Gewindeelement nach der Erfindung sorgt mit dem Halteblech dafür, daß an den Schnittstellen von Bauteil und Trägerbauteil keine Gewinde im Trägerbauteil mehr notwendig sind. Die Anlagepunkte zwischen Bauteil und Trägerbauteil werden durch die Haltebleche definiert. Insbesondere ist eine Dreipunktlagerung zwischen Bauteil und Trägerbauteil möglich, welche ein Nacharbeiten an den Schnittstellen überflüssig macht.

Durch die Verwendung von mehreren Gewinden pro Mehrfach-Gewindeelement können je nach Anzahl der Gewinde beliebig große Kräfte übertragen werden. Gleichwohl kann das Trägerbauteil dünnwandiger ausgeführt werden, weil seine Dicke im Bereich der Bohrungen nicht mehr von einer Mindesteinschraubtiefe abhängig ist. Die Durchgangsbohrungen im Trägerbauteil können im Durchmesser größer als der Außendurchmesser der Gewindebolzen ausfallen, wodurch Toleranzen bei größeren Bohrungsabständen ausgeglichen werden. Eine Anpassung an Toleranzen kann entweder manuell durch Verschieben des Gewindeelements während der Montage erfolgen oder dadurch, daß im Eingangsbereich der Gewinde eine ausreichend große Fase geformt wird, durch welche eine Selbstausrichtung beim Einsetzen der Gewindebolzen stattfindet.

Ein weiterer Vorteil liegt bei der Erfindung darin, daß durch die Verwendung von mehreren Gewinden im Gewindeelement verhindert wird, daß sich das Gewindeelement beim Anziehen der Befestigungsschrauben verdrehen kann.

Das Unterlegblech bzw. der Unterlegabschnitt des Haltebleches ist derart gestaltet, daß eine kraftübertragende Verbindung ermöglicht ist. Hierzu gehört auch eine geeignete Oberfächenbeschaffenheit im Hinblick auf Rauheit und Härte. Die Blechdicke ist für die jeweilige Reibschlußverbindung ausgelegt.

Durch die Verwendung von mehreren nebeneinander angeordneten Gewinden kann anders als bei Einzelgewinden die Anzahl der Anlageflächen unabhängig von der Größe der zu übertragenden Kraft festgelegt werden. So können z.B. drei Anlageflächen für eine Dreipunktauflage vorgesehen werden, obwohl nach der Festigkeitsberechnung sechs Schrauben notwendig sind.

Bei Ausbildung des Halteblechs als Unterlegabschnitt weist letzterer notwendigerweise Durchgangsöffnungen auf, die mit den Gewindebohrungen im Gewindeelement ausgerichtet sind. Nach einer Ausgestaltung der Erfindung weisen die Löcher des Unterlegabschnitts Kragen auf, die in zugekehrte Gewindebohrungen des Trägerbauteils eingreifen. Auf diese Weise wird eine Lagerorientierung des Gewindeelements im Hinblick auf die Durchgangsbohrungen im Trägerbauteil erzielt. Ferner ist das Gewindeelement ausreichend sicher vorübergehend gehalten, bis die Schrauben festgezogen sind.

Nach einer anderen Ausgestaltung der Erfindung ist das Halteblech seitlich am Gewindeelement angebracht. Die Anbringung kann etwa durch Verkleben, Verrasten, Verschweißen oder Verpressen der Teile erfolgen. In einer Ausgestaltung der Erfindung ist hierzu vorgesehen, daß das Gewindeelement an gegenüberliegenden Enden Vorsprünge aufweist, die in Öffnungen greifen, die in das Gewindeelement seitlich umgreifenden Schenkeln des Halteblechs geformt sind. Bei dieser Ausgestaltung wird das Halteblech auf dem Gewindeelement verrastet. Das Gewindeelement ist ein massives Teil, das z.B. von einem Abschnitt eines Vierkantprofils gebildet ist. Es kann auch als Schmiedeteil hergestellt werden.

Die erfindungsgemäße Vorrichtung ist insbesondere zur Anwendung in Flurförderzeugen geeignet, etwa zur Anbringung einer Antriebseinheit, einer Hubzylindereinheit oder dergleichen.

Nach einer weiteren Ausgestaltung der Erfindung weist das Gewindeelement eine längliche bzw. bogenförmige Gestalt auf mit mehreren beabstandet angeordneten Gewindeabschnitten mit jeweils mindestens zwei benachbarten Gewindebohrungen. Das Gewindeelement hat mindestens ein Halteblech. Vorzugsweise ist den Gewindebohrungsabschnitten jeweils ein Halteblech zugeordnet. Es versteht sich jedoch, daß die Anzahl der Haltebleche auch größer oder kleiner als die Anzahl der Gewindebohrungsabschnitte sein kann. Die Anbringung einer Einheit am Rahmen des Flurförderzeugs enthält typischerweise eine Rahmenplatte am Flurförderzeug mit einer Öffnung, in welche Teile der Einheit hineinragen. Die Rahmenplatte weist die erwähnten Durchbohrungen auf, die relativ nahe der Einbauöffnung in der Rahmenplatte geformt sind. Die einzubauende Einheit weist einen Flansch auf oder ist ihrerseits mit einer Platte versehen, die Durchgangsbohrungen aufweist für die Aufnahme des Schaftes der Gewindebolzen oder -schrauben, welche in die Gewindebohrungen des Gewindeelements eingeschraubt werden. Das Gewindeelement kann, ein Ringsegment sein, an dem im gleichmäßigen Umfangsabstand Gewindebohrungsabschnitte vorgesehen sind.

Ausführungsbeispiele der Erfindung werden nachfolgend anhand von Zeichnungen näher erläutert.
- Fig. 1: zeigt perspektivisch eine erste Ausführungsform eines erfindungsgemäßen Mehrfach-Gewindeelements.
- Fig. 2: zeigt perspektivisch die Frontansicht der Darstellung nach Fig. 1.
- Fig. 3: zeigt die Draufsicht auf das Mehrfach-Gewindeelement nach den Fign. 1 und 2.
- Fig. 4: zeigt perspektivisch eine zweite Ausführungsform eines Mehrfach-Gewindeelements nach der Erfindung.
- Fig. 5: zeigt perspektivisch das Mehrfach-Gewindeelement nach Fig. 4 von schräg unten gesehen.
- Fig. 6: zeigt die Rückansicht des Mehrfach-Gewindeelements nach den Fign. 4 und 5.
- Fig. 7: zeigt perspektivisch eine weitere Ausführungsform eines Mehrfach-Gewindeelements nach der Erfindung.
- Fig. 8: zeigt das Mehrfach-Gewindeelement nach Fig. 7 in einer perspektivischen Ansicht von unten.
- Fig. 9: zeigt eine Untersicht des Mehrfach-Gewindeelements nach den Fign. 7 und 8.
- Fig. 10: zeigt perspektivisch eine weitere Ausführungsform eines Mehrfach-Gewindeelements nach der Erfindung.
- Fig. 11: zeigt die Draufsicht auf das Mehrfach-Gewindeelement nach Fig. 10.
- Fig. 12: zeigt eine Trägerplatte im Rahmen eines Flurförderzeugs.
- Fig. 13: zeigt den Einbau einer Antriebseinheit für ein Flurförderzeug in den Rahmen nach Fig. 12.
- Fig. 14: zeigt eine Seitenansicht der eingebauten Antriebseinheit nach Fig. 13.
- Fig. 15: zeigt einen Schnitt durch die Darstellung nach Fig. 14 entlang der Linie 15-15.

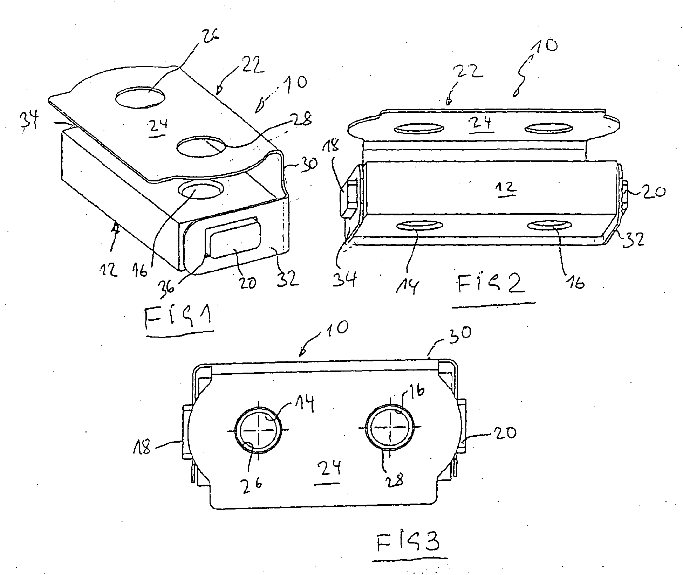

In den Fign. 1 bis 3 ist eine erste Ausführungsform eines Mehrfach-Gewindeelements dargestellt. Es ist allgemein mit den Bezugszeichen 10 versehen. Es weist einen Gewindeblock 12 mit zwei benachbarten Gewindebohrungen 14, 16 auf. Der Gewindeblock 12 ist ein Vierkantstahlprofil mit Vorsprüngen 18, 20 an den gegenüberliegenden Längsenden. Am Gewindeblock 12 ist ein Halteblech 22 angebracht. Das Halteblech weist einen Unterlegabschnitt 24 auf mit Löchern 26, 28, deren Achsen zu den Achsen der Gewindebohrungen 14, 16 ausgerichtet sind. Ein weiterer Abschnitt 30 des Haltebleches 22 ist rechtwinklig gegenüber dem Unterlegabschnitt 24 abgebogen und liegt an der einen Längsseite des Gewindeblocks 12 an. Schenkel oder Lappen 32, 34 sind in Richtung des Unterlegabschnitts 24 um 90° vom Blechabschnitt 30 abgebogen. Sie weisen jeweils eine Öffnung 36 auf, in welche die Vorsprünge 18, 20 eingreifen. Dadurch ist das Halteblech 22 am Gewindeblock 12 gehalten. Der Einsatz des Mehrfach-Gewindeelements 10 nach den Fign. 1 bis 3 wird weiter unten noch erläutert. Zunächst seien weitere Ausführungsformen besprochen.

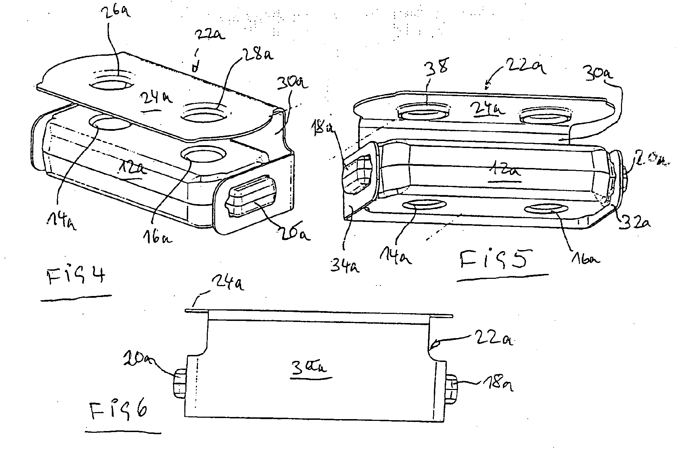

In den Fign. 4 bis 6 ist eine weitere Ausführungsform eines Mehrfach-Gewindeelements dargestellt, die derjenige nach den Fign. 1 bis 3 relativ ähnlich ist. Daher werden gleiche Bezugszeichen verwendet, denen ein Index a hinzugefügt ist.

Ein Unterschied zur Ausführungsform nach den Fign. 1 bis 3 besteht darin, daß der Gewindeblock 12a ein Schmiedestück ist. Außerdem läßt sich in Fig. 5 erkennen, daß die Löcher 26a, 28a auf der Seite des Unterlegabschnitts 24a einen Kragen 38 aufweisen. Der Zweck dieser Kragen 38 wird weiter unten erläutert.

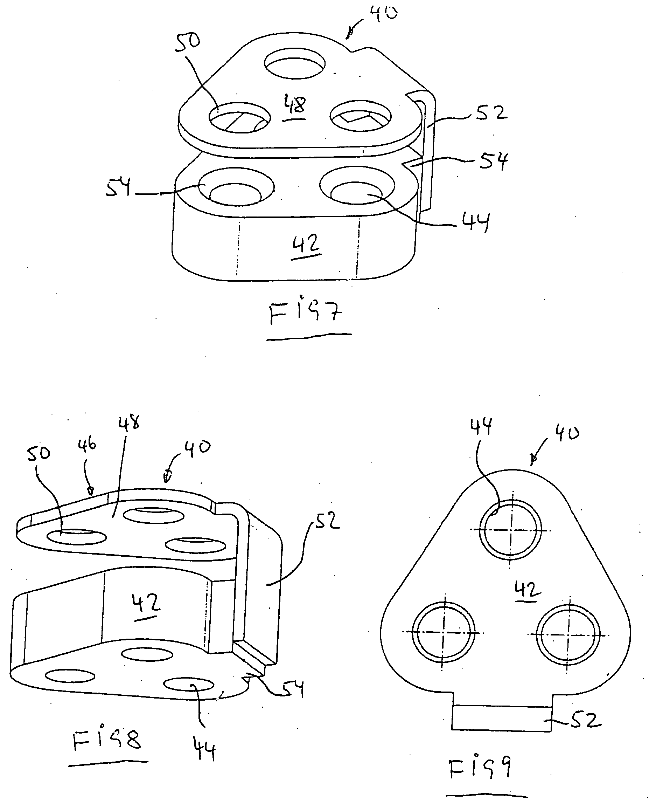

Bei der Ausführungsform nach den Fign. 7 bis 9 ist ein Mehrfach-Gewindeelement 40 dargestellt. Es weist einen im wesentlichen herzförmigen Gewindeblock 42 auf mit drei im Dreieck angeordneten Gewindebohrungen 44. Der Gewindeblock 42 ist genauso wie die Gewindeblöcke 12 bzw. 12a nach den Fign. 1 bis 6 mit planparallelen Flächen versehen, in denen die Gewindebohrungen 14, 16 münden. Ein Halteblech 46 weist einen Unterlegabschnitt 48 auf mit drei Löchern 50, die zu den Gewindebohrungen 44 ausgerichtet sind. An den Unterlegabschnitt 46 schließt sich um 90° abgebogen ein Befestigungsabschnitt 52 an, der an einem quaderförmigen Ansatz 54 des Gewindeblocks 42 anliegt und dort durch Schweißung, Verklebung oder dergleichen befestigt ist. Die Gewindebohrungen 44 haben auf der dem Unterlegabschnitt 48 zugewandten Ende eine ausgeprägte Fase 54. Eine solche Fase ist auch bei den Gewindebohrungen 14, 16 bzw. 14a, 16a nach den Fign. 1 bis 6 vorgesehen.

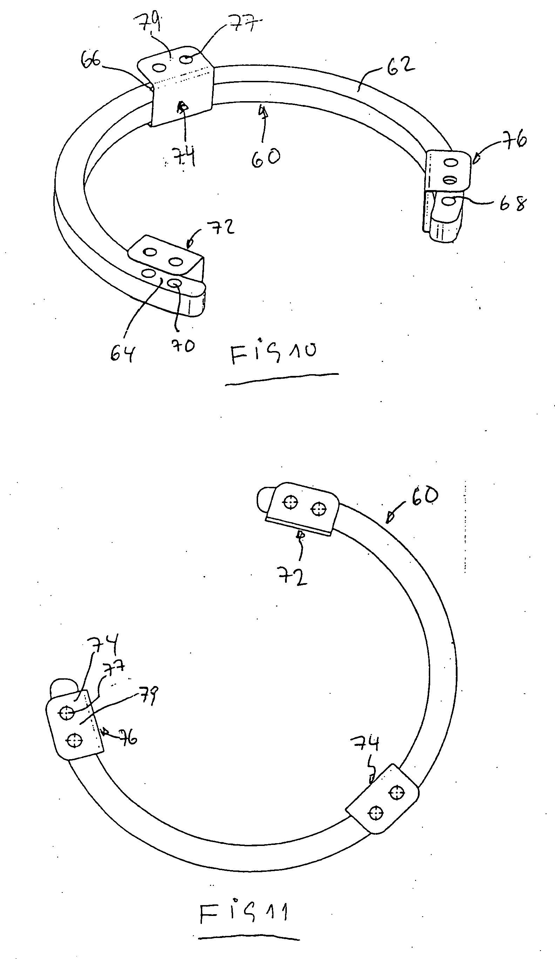

In den Fign. 10 und 11 ist eine vierte Ausführungsform eines Gewindeelements 60 dargestellt. Ein Ringsegment 62 von rechteckigem Querschnitt erstreckt sich um einen Winkel von etwas mehr als 270°. Es weist im gleichen Abstand voneinander Gewindebohrungsabschnitte 64, 66, 68 auf mit jeweils einem Paar benachbarter Gewindebohrungen 70. Jedem Gewindebohrungsabschnitt 64, 66, 68 ist ein Halteblech 72, 74 bzw. 76 zugeordnet. Ein Unterlegabschnitt 79 der Haltebleche 72, der im Abstand zum Ringsegment 62 verläuft, wie dies auch mit den Unterlegabschnitten bei anderen Ausführungsformen der Fall ist, enthält wiederum zwei Durchgangslöcher 77, die jeweils zu den Gewindebohrungen 70 ausgerichtet sind.

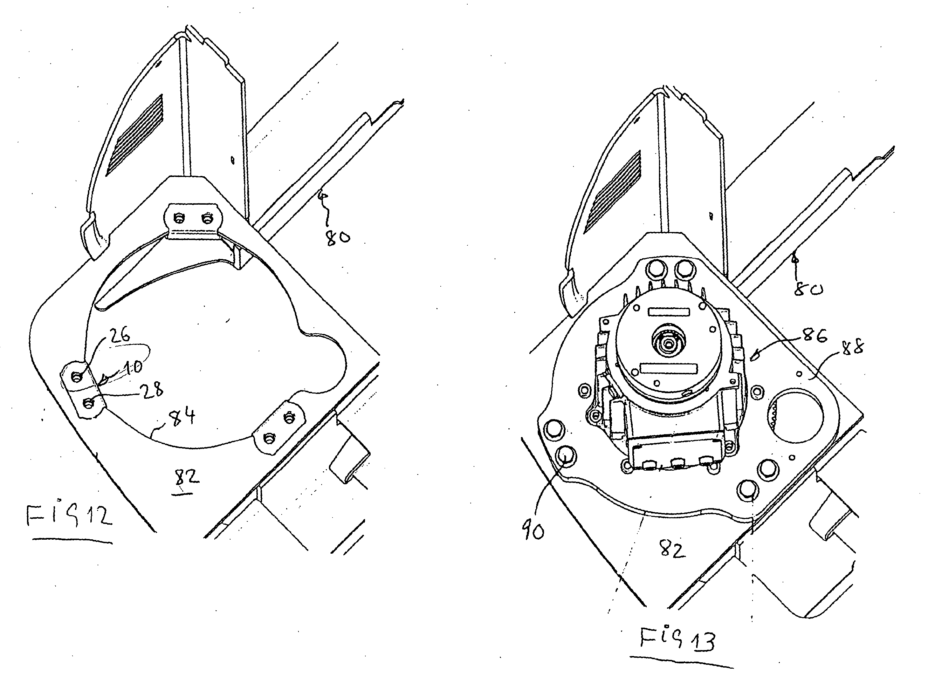

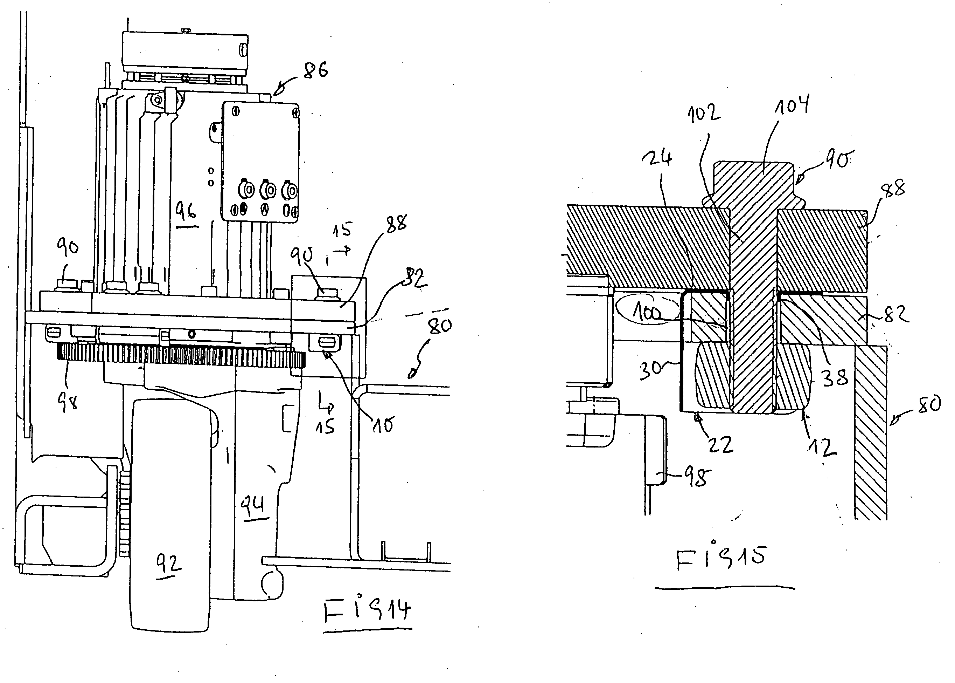

In den Fign. 12 bis 14 ist ein Rahmen 80 eines nicht gezeigten Flurförderzeugs angedeutet. Der Rahmen 80 enthält eine Trägerplatte 82 mit einer großen annähernd kreisförmigen Öffnung 84. Die Trägerplatte 82 ist fest mit dem Rahmen 80 verschweißt. Am Rand der Öffnung 84 sind drei Mehrfach-Gewindeelemente im gleichen Umfangsabstand voneinander angeordnet. Sie gleichen z.B. den Mehrfach-Gewindeelementen 10 nach Fig. 1 bis 3. Es können jedoch auch Mehrfach-Gewindeelemente nach den Fign. 4 bis 6 oder 7 bis 9 vorgesehen sein. Die Trägerplatte 82 dient der Befestigung einer Antriebseinheit 86 für das nicht gezeigte Flurförderzeug. Die Antriebseinheit ist durch Verschraubung fest mit einer Platte 88 verbunden, die auf die Trägerplatte 82 aufgelegt ist (Fign. 13 und 14). Die Platte 88 weist drei Paar Durchgangslöcher oder -bohrungen auf, in welche Befestigungsschrauben 90 aufgenommen sind. Die Durchgangslöcher sind so angeordnet, daß sie mit den Löchern 26, 28 der Haltebleche bzw. den Gewindebohrungen 14, 16 der Gewindeblöcke ausgerichtet sind. Die Befestigungsweise wird später noch anhand von Fig. 15 erläutert.

In Fig. 14 ist zu erkennen, daß die Antriebseinheit ein Antriebsrad 92 aufweist, das über ein Getriebe 94 von einem Elektromotor 96 angetrieben ist. Die mit dem Antriebsrad 92 bzw. dem Getriebe 94verbundenen Teile bilden einen sogenannten Drehschemel, der eine Drehung des Rades um eine vertikale Achse ermöglicht. Dies ist allgemein bekannt. Für den Schwenkantrieb sorgt ein Lenkmotor, der hier nicht dargestellt ist.

In Fig. 15 ist die Befestigung der Platte 88 mit der Antriebseinheit 86 an der Trägerplatte 82 anhand einer Befestigungsstelle dargestellt. Es ist zu erkennen, daß der Abstand zwischen dem Unterlegabschnitt 24 des Halteblechs 22 und der zugekehrten Oberseite des Gewindeblocks 12 minimal größer ist als die Dicke der Trägerplatte 82. Vor der Montage der Antriebseinheit 86 werden die Mehrfach-Gewindeelemente entsprechend der Verteilung nach Fig. 12 bzw. 13 eingesetzt, wobei die Kragen 38 der Unterlegabschnitte 24 ein kurzes Stück in die Durchgangsbohrungen 100 in der Trägerplatte 82 eingreifen. Die Durchgangsbohrungen 100 sind im Durchmesser etwas größer als der Durchmesser eines Schaftes 102 der Befestigungsschraube 90, deren Kopf 104 auf der Oberseite der Platte 88 zu liegen kommt, wenn der Gewindeabschnitt des Schaftes 102 in die Gewindebohrung 14 bzw. 16 eingeschraubt wird. (Es sei nochmals erwähnt, daß bei der Anwendung der gezeigten Mehrfach-Gewindeelemente beispielhaft nur die Ausführungsform nach den Fign. 1 bis 3 diskutiert wird. Es versteht sich, daß auch die Ausführungsformen nach den Fign. 3 bis 6 bzw. 7 bis 9 zum Einsatz kommen können.) Anschließend wird die Antriebseinheit 86 mit der Platte 88 auf die Trägerplatte 82 aufgesetzt, wobei die Durchbohrungen oder Löcher der Platte 88 zu den Durchbohrungen 100 ausgerichtet werden. Mit Hilfe der Schrauben 90 kann nunmehr die Platte 88 gegen die Trägerplatte 82 gespannt werden, wobei der Unterlegabschnitt 24 der Haltebleche 22 für eine wirksame Reibverbindung sorgt.

Wie gezeigt, ist damit eine Dreipunktlagerung geschaffen, die wegen der Mehrfachanordnung der Gewindebohrungen in den Gewindeelementen für die Übertragung großer Kräfte geeignet ist. Die Trägerplatte 82 kann relativ dünn ausgeführt werden, da sie keine Gewindebohrungen nahe dem Rand der Öffnung 84 aufweisen muß.

## Patentansprüche

1. Befestigungsvorrichtung, die ein Halteblech (22) und mindestens ein Gewindeelement (10, 10a, 40, 60) aufweist, zur Befestigung eines Bauteils an einem eine Öffnung aufweisenden Trägerbauteil mittels Gewindebolzen, die durch Bohrungen des Bauteils hindurchgeführt und in Gewindebohrungen des mindestens einen Gewindeelements (10, 10a, 40, 40) eingeschraubt werden können, wobei Bauteil und Trägerbauteil gegeneinander gespannt und reibschlüssig miteinander verbindbar sind, wobei zwischen dem Bauteil und dem Trägerbauteil im Bereich der Bohrungen bzw. Gewindebohrungen ein Unterlegblech anordenbar ist, wobei ferner an dem mindestens einen Gewindeelement (10, 10a, 40, 60) das eine Halteblech (22) angebracht ist und am Halteblech (22) und am Trägerbauteil (82) nahe der Öffnung Positioniermittel vorgesehen sind, durch welche das Gewindeelement auf der dem Bauteil (88) gegenüberliegenden Seite des Trägerbauteils (82) mit lagerichtiger Ausrichtung der Gewindebohrung zu Durchgangsbohrung (100) im Trägerbauteil (82) gehalten ist, **dadurch gekennzeichnet, dass** das mindestens eine Gewindeelement (10, 10a, 40, 60) ein massives Gewindeelement (10, 10a, 40, 60) mit mindestens zwei parallelen, nahe beieinanderliegenden Gewindebohrungen (14, 16, 14a, 16a, 44) vorgesehen ist, und dass das Unterlegblech (22, 22a, 40, 72, 74, 76) von einem Unterlegabschnitt (24, 24a, 42, 79) des Halteblechs (22, 22a, 40, 72, 74, 76) gebildet ist, das zwei zu den Gewindebohrungen (14, 16, 14a, 16a, 44) ausgerichtete Löcher (26, 28, 26a, 28a, 50, 77) aufweist.

2. Vorrichtung nach Anspruch 1, **dadurch gekennzeichnet, dass** Löcher (26, 28, 26a, 28a, 50, 77) des Unterlegabschnitts Kragen (38) aufweisen, die in zugekehrte Bohrungen (100) des Trägerbauteils (82) eingreifen können.

3. Vorrichtung nach Anspruch 1 oder 2, **dadurch gekennzeichnet, dass** das Halteblech (10, 10a, 40, 72, 74, 76) seitlich am blockförmigen Gewindeelement (10, 10a, 40, 60) angebracht ist.

4. Vorrichtung nach Anspruch 3, **dadurch gekennzeichnet, dass** das blockförmige Gewindeelement (10, 10a) an gegenüberliegenden Enden Vorsprünge (18, 20, 18a, 20a) aufweist, die in Öffnungen eingreifen, die in Schenkeln (32, 34, 32a, 34a) des Halteblechs (22, 22a) geformt sind.

5. Vorrichtung nach einem der Ansprüche 1 bis 4, **dadurch gekennzeichnet, dass** das Gewindeelement (10, 10a, 40) einen Abschnitt eines Vierkantprofils aufweist.

6. Vorrichtung nach einem der Ansprüche 1 bis 4, **dadurch gekennzeichnet, dass** das Gewindeelement ein Schmiedeteil aufweist.

7. Vorrichtung nach einem der Ansprüche 1 bis 6, **dadurch gekennzeichnet, dass** die Gewindebohrungen (14, 16, 14a, 16a, 44) am Eintritt eine Fase (54) aufweisen.

8. Vorrichtung nach einem der Ansprüche 1 bis 7, **dadurch gekennzeichnet, dass** ein längliches bzw. bogenförmiges Gewindeelement mehrere beabstandete Gewindebohrungsabschnitte (64, 66, 68) mit jeweils mindestens zwei benachbarten Gewindebohrungen (70) aufweist und mindestens ein Halteblech (72, 74, 76) den Gewindebohrungen zugeordnet ist.

9. Vorrichtung nach Anspruch 8, **dadurch gekennzeichnet, dass** an einem Ringsegment (62) drei Gewindebohrungsabschnitte (64, 66, 68) in gleichmäßigem Umfangsabstand voneinander angeordnet sind für eine Dreipunktlagerung des Bauteils am Trägerbauteil.

10. Verwendung der Vorrichtung nach einem der Ansprüche 1 bis 9 auf den Einbau eines Bauteils in einem Rahmen (80) eines Flurförderzeugs, wobei eine Rahmenplatte (82) mit einer Öffnung (84) das Trägerbauteil bildet und mehrere Gewindeelemente (10) am Rand der Öffnung (84) angeordnet sind und das Bauteil eine Platte (88) oder einen Flansch aufweist.

## Claims

1. Fastening device which has a holding plate (22) and at least one threaded element (10, 10a, 40, 60), for fastening a component to a support part having an opening by means of threaded bolts which are guided through bores of the component and can be screwed into threaded bores of the at least one threaded element (10, 10a, 40, 60), wherein component and support part are tensioned against each other and connectable to each other by frictional fit, wherein a bearing plate can be arranged between the component and the support part in the region of the bores or threaded bores, respectively, wherein further the single holding plate (22) is mounted on the at least one threaded element (10, 10a, 40, 60) and positioning means are provided on the holding plate (22) and on the support part (82) near to the opening, by which the threaded element is held in the support part (82) on the side of the support part (82) opposite to the component (88) with positionally correct alignment of the threaded bore with respect to through bore (100), **characterised in that** the at least one threaded element (10, 10a, 40, 60) is provided as a massif threaded element (10, 10a, 40, 60) with at least two parallel threaded bores (14, 16, 14a, 16a, 44) in close distance to each other, and that the bearing plate (22, 22a, 40, 72, 74, 76) is formed by a bearing portion (24, 24a, 42, 79) of the holding plate (22, 22a, 40, 72, 74, 76) which has two holes (26, 28, 26a, 28a, 50, 77) aligned to the threaded bores (14, 16, 14a, 16a, 44).

2. Device according to claim 1, **characterised in that** holes (26, 28, 26a, 28a, 50, 77) of the bearing portion have collars (38) which can engage into facing bores (100) of the support part (82).

3. Device according to claim 1 or 2, **characterised in that** the holding plate (10, 10a, 40, 72, 74, 76) is mounted laterally on the block-shaped threaded element (10, 10a, 40, 60).

4. Device according to claim 3, **characterised in that** the block-shaped threaded element (10, 10a) has projections (18, 20, 18a, 20a) on opposite ends, which engage into openings which are formed in limbs (32, 34, 32a, 34a) of the holding plate (22, 22a).

5. Device according to any one of claims 1 to 4, **characterised in that** the threaded element (10, 10a, 40) features a portion of a square profile.

6. Device according to any one of claims 1 to 4, **characterised in that** the threaded element has a forged part.

7. Device according to any one of claims 1 to 6, **characterised in that** the threaded bores (14, 16, 14a, 16a, 44) have a chamfer (54) on the lead-in.

8. Device according to any one of claims 1 to 7, **characterised in that** an oblong or respectively arc-shaped threaded element has several spaced apart threaded bore portions (64, 66, 68), each having at least two neighbouring threaded bores (70), and at least one holding plate (72, 74, 76) is associated to the threaded bores.

9. Device according to claim 8, **characterised in that** three threaded bore portions (64, 66, 68) are disposed on a ring segment (62) at equal perimeter distances, for a three-point bearing of the component on the support part.

10. Utilization of the device according to any one of claims 1 to 9 in the installation of a component in a frame (80) of an industrial truck, wherein a frame board (82) with an opening (84) forms the support part and several threaded elements (10) are disposed on the edge of the opening (84) and the component has a board (88) or a flange.

## Revendications

1. Dispositif de fixation qui a une tôle de support (22) et au moins un élément fileté (10, 10a, 40, 60), pour la fixation d'un composant sur un élément de support ayant une ouverture à l'aide de boulons filetés qui sont guidés au travers d'alésages du composant et peuvent être vissés dans des alésages filetés de l'au moins un élément fileté (10, 10a, 40, 60), dans lequel le composant et l'élément de support sont tendus l'un contre l'autre et connectable l'un à l'autre via entraînement par friction, dans lequel une cale peut être disposée entre le composant et l'élément de support dans la région des alésages ou respectivement alésages filetés, dans lequel en outre la seule tôle de support (22) est montée sur l'au moins un élément fileté (10, 10a, 40, 60) et des moyens de positionnement sont pourvus sur la tôle de support (22) et sur l'élément de support (82) près de l'ouverture, par lesquels l'élément fileté est tenu dans l'élément de support (82) au côté de l'élément de support (82) opposé au composant (88) avec alignement de position de l'alésage fileté par rapport à l'alésage traversant (100) correct, **caractérisé en ce que** l'au moins un élément fileté (10, 10a, 40, 60) est pourvu comme élément fileté massif (10, 10a, 40, 60) avec au moins deux alésages filetés parallèles (14, 16, 14a, 16a, 44) se côtoyantes et que la cale (22, 22a, 40, 72, 74, 76) est formée par une partie de cale (24, 24a, 42, 79) de la tôle de support (22, 22a, 40, 72, 74, 76) qui a deux trous (26, 28, 26a, 28a, 50, 77) alignés aux alésages filetés (14, 16, 14a, 16a, 44).

2. Dispositif selon la revendication 1, **caractérisé en ce que** des trous (26, 28, 26a, 28a, 50, 77) de la partie de cale ont des manchettes (38) qui peuvent s'engager dans des alésages (100) de l'élément de support (82) qui font face.

3. Dispositif selon la revendication 1 ou 2, **caractérisé en ce que** la tôle de support (10, 10a, 40, 72, 74, 76) est latéralement montée sur l'élément fileté en forme de bloc (10, 10a, 40, 60).

4. Dispositif selon la revendication 3, **caractérisé en ce que** l'élément fileté en forme de bloc (10, 10a) a des parties en saillie (18, 20, 18a, 20a) sur des extrémités opposés, qui s'engagent dans des ouvertures qui sont formées dans des ailes (32, 34, 32a, 34a) de la tôle de support (22, 22a).

5. Dispositif selon l'une quelconque des revendications 1 à 4, **caractérisé en ce que** l'élément fileté (10, 10a, 40) a une partie d'un profil quatre pans.

6. Dispositif selon l'une quelconque des revendications 1 à 4, **caractérisé en ce que** l'élément fileté a une pièce forgée.

7. Dispositif selon l'une quelconque des revendications 1 à 6, **caractérisé en ce que** les alésages filetés (14, 16, 14a, 16a, 44) ont un chanfrein (54) dans l'entrée.

8. Dispositif selon l'une quelconque des revendications 1 à 7, **caractérisé en ce que** un élément fileté allongé ou respectivement arqué a plusieurs parties d'alésage fileté (64, 66, 68) avec écartement et chacun avec au moins deux alésages filetés avoisinants (70), et au moins une tôle de support (72, 74, 76) est associée aux alésages filetés.

9. Dispositif selon la revendication 8, **caractérisé en ce que** trois parties d'alésage fileté (64, 66, 68) sont disposées dans un segment annulaire (62) en distances circonférentielles égales, pour un montage par trois points du composant sur l'élément de support.

10. Utilisation du dispositif selon l'une quelconque des revendications 1 à 9 pour l'installation d'un composant dans un cadre (80) d'un chariot de manutention, une dalle de cadre (82) avec une ouverture (84) formant l'élément de support et plusieurs éléments filetés (10) étant disposés au bord de l'ouverture (84) et le composant ayant une plaque (88) ou une bride.
